# EUROPÄISCHE PATENTANMELDUNG

(11) **EP 0 933 185 A2**
(43) Veröffentlichungstag der Anmeldung: **04.08.1999**
(21) Anmeldenummer: 99100183.5
(22) Anmeldetag: 07.01.1999
(51) Int. Cl.: B29C 45/53, B29C 45/00, B29C 45/13

(54) **Verfahren und Vorrichtung zum Spritzpressen von faserverstärkten Kunststoffen**

(30) Priorität: 29.01.1998 DE 19803422
(71) Anmelder: remaplan Anlagenbau GmbH, 94405 Landau (DE)
(72) Erfinder: Rüttnauer, Rochus Clemens, 94405 Landau (DE)
(74) Vertreter: Patentanwälte Dr. Solf & Zapf

(57) **Zusammenfassung**

Die Erfindung betrifft ein Verfahren und eine Vorrichtung zum Spritzpressen von faserverstärkten Kunststoffen, wobei
a) ein Kunststoffausgangsmaterial, z.B. zerkleinertes oder granuliertes Kunststoffausgangsmaterial einer Plastifizierungseinrichtung (2), bestehend aus einem Extrudergehäuse (8) und einer sich im Extrudergehäuse (8) um eine Längsachse (13) drehenden Extruderschnecke (9) aufgegeben und in der Plastifizierungseinrichtung (2) plastifiziert und in Richtung eines Formwerkzeuges gefördert wird,
b) im Bereich der Plastifizierungseinrichtung (2) zu der plastifizierten Masse Fasermaterial zugegeben und beim weiteren Transportieren in der Plastifizierungseinrichtung (2) mit der plastifizierten Kunststoffmasse vermischt wird,
c) die plastifizierte, Fasern enthaltende Masse einer Einspritzeinrichtung (37) zugeführt wird und mit der Einspritzeinrichtung (37) durch eine Einspritzdüse (50) in ein aus mindestens zwei Teilen (68,75) gebildeten Formwerkzeug eingespritzt und anschließend im Formwerkzeug zu einem Formling gepreßt wird,
wobei die plastifizierte Masse zumindest nach der Zugabe des Fasermaterials entlang einer gerade verlaufenden Transportstrecke im Bereich einer zentralen Längsachse (13) der Plastifizierungseinrichtung (2), der Einspritzeinrichtung (37) und der Einspritzdüse (50) bis zum Formwerkzeug gefördert wird.

## Beschreibung

Die Erfindung betrifft ein Verfahren zum Spritzpressen von faserverstärkten Kunststoffen nach dem Oberbegriff des Anspruch 1 sowie eine Vorrichtung zum Durchführen des Verfahrens nach dem Oberbegriff des Anspruchs 14.

Eine Spritzgießvorrichtung (Fig. 5a bis 5c) ist aus dem Kunststofftaschenbuch, Carl Hanser-Verlag, 22. Auflage, S. 81 ff. bekannt.

Diese Spritzgießvorrichtung weist eine in einem Spritzgießzylinder 101 dreh- und axial verschiebbar gelagerte Schnecke 102 auf, die sowohl zum Fördern, Plastifizieren, Homogenisieren und zum Einspritzen einer Kunststoffmasse in eine Form dient.

Die Kunststoffmasse wird von einem hinteren Ende des Spritzgießzylinders 101, an dem eine Antriebseinheit 103 zum Antreiben der Schnecke 102 angeordnet ist, zu einem vorderen Ende des Spritzgießzylinders 101 befördert, an dem ein Spritzgießwerkzeug 104 angeordnet ist, in das die Kunststoffmasse eingespritzt wird. Die Antriebseinheit weist einen Elektromotor 105 auf, der die Schnecke in Drehbewegung versetzt, wobei der Elektromotor 105 bezüglich einer Schneckenlängsachse 106 seitlich versetzt angeordnet ist und über ein Getriebe ein Antriebszahnrad 107 antreibt. Das Antriebszahnrad 107 wird zentral von einem mit einer Längszahnung ausgebildeten Bereich der Schnecke 102 durchgriffen. Im Durchgriffsbereich weist das Zahnrad 107 eine Zahnung auf, die mit der Längszahnung der Schnecke kämmt. Auf diese Weise kann die Schnecke eine Axialbewegung während ihres Antriebs durch das axial unverrückbare Zahnrad 107 ausführen.

Zum axialen Verschieben der Schnecke 102 ist ein hydraulischer Zylinder-Kolbenmechanismus 109 in der Antriebseinheit vorgesehen, dessen Kolben oder Kolbenstange am hinteren Ende der Schnecke angreift. Ferner sind zwei Endschalter 110 in der Antriebseinheit 103 angeordnet, die eine vordere bzw. rückwärtige Endstellung der Schnecke 102 wahrnehmen und eine Hubbegrenzung bewirken. Im rückwärtigen Bereich des Spritzgießzylinders 101 befindet sich ein Fülltrichter 111 zum Zuführen von kalter Formmasse in den Spritzgießzylinder 101.

Der vordere Bereich des Spritzgießzylinders 101 bildet einen Sammelraum 112, in dem sich homogenisierte und plastifizierte Formmasse vor dem Einspritzen in das Spritzgießwerkzeug 104 ansammeln kann. Die Formmasse wird aus dem Sammelraum 112 über eine beheizbare Düse 113 in das Spritzgießwerkzeug 104 eingespritzt. Die im Sammelraum 112 angesammelte homogenisierte und plastifizierte Formmasse wird durch eine axiale Bewegung der Schnecke 102 in Richtung zum Spritzgießwerkzeug 104 in die durch das Spritzgießwerkzeug 104 begrenzte Form eingepreßt. Hierbei wird die Schnecke 102 in der Regel nicht gedreht, sondern nur mit Hilfe des Kolben-Zylindermechanismus 109 axial verschoben.

Die in das Spritzgießwerkzeug eingespritzte Formmasse erstarrt unter dem Nachdruck der in ihrer vorderen Endstellung über einem Massepolster stillstehenden Schnecke 102 zu einem Formkörper 114. Danach wird das aus zwei Hälften bestehende Spritzgießwerkzeug 104 geöffnet und der Formkörper 114 entnommen und gleichzeitig die Schnecke 102 durch den Motor 105 angetrieben. Durch die Drehbewegung der Schnecke 102 wird bei geschlossener Düse aus dem Fülltrichter 111 kalte Formmasse in den Spritzgießzylinder 101 gezogen. Die Formmasse wird aufgrund der zwischen der Schnecke 102 und der Formmasse bzw. dem Spritzgießzylinder 101 auftretenden Druck- und Scherkräfte plastifiziert und homogenisiert. Die plastifizierte und homogenisierte Formmasse wird durch die Schnecke 102 in den vorderen Bereich des Spritzgießzylinders 101 befördert, wo sich die Masse im Sammelraum 112 ansammelt und die Schnecke 102 mit einer Kraft entgegen der Förderrichtung beaufschlagt, so daß die Schnecke 102 aus ihrer vorderen Endstellung in ihre rückwärtige Endstellung bewegt wird.

Hat sich eine ausreichende Menge an Formmasse im Sammelraum 112 angesammelt, wird die Schnecke 102 wieder zum Einspritzen der Formmasse in das Spritzgießwerkzeug 104 bewegt.

Die pro Einspritzvorgang einzuspritzende Menge an Formmasse ergibt sich aus dem maximalen Verstellweg der Schnecke 102 multipliziert mit der durch den Spritzgießzylinder 101 begrenzten Querschnittsfläche. Der maximale Verstellweg ist der Abstand zwischen der vorderen und hinteren Endstellung der Schnecke 102 z. B. der Abstand zwischen den beiden Endschaltern 110.

Will man die maximale Einspritzmenge erhöhen, so muß man den Verstellweg verlängern und/oder die Querschnittsfläche des Spritzgießzylinders 101 vergrößern. Der Verstellweg kann nicht beliebig vergrößert werden, weshalb zum Spritzgießen größerer Formkörper üblicherweise Spritzgießvorrichtungen verwendet werden, deren Spritzgießzylinder bzw. deren Schnecken einen großen Durchmesser aufweisen. Solche "großen" Spritzgießvorrichtungen sind jedoch teuer und benötigen unverhältnismäßig viel Energie zum Antreiben der großvolumigen Schnecke.

Aus der DE 42 37 217 A1 ist eine Spritzgießvorrichtung bekannt, die einen Extruder bzw. Plastifikator kleiner Leistung aufweist, und dennoch großvolumige Gießformen in sehr kurzer Zeit befüllen können soll. Diese Spritzgießvorrichtung weist hierzu eine Extruderschnecke auf, die plastifizierte Formmasse in einen DruckDosierspeicher fördert. Der Druck-Dosierspeicher ist ein Hohlzylinder, in dem verschieblich ein Kolben lagert. Die Formmasse wird gegen eine Zurückbewegung des Kolbens in den Druck-Dosierspeicher gefüllt. Entspricht die im Speicher befindliche Menge an Formmasse dem Volumen des zu fertigenden Formteils, so wird der Kolben zum Einspritzen der Formmasse in das Formwerkzeug von einem Hydraulikzylinder betätigt.

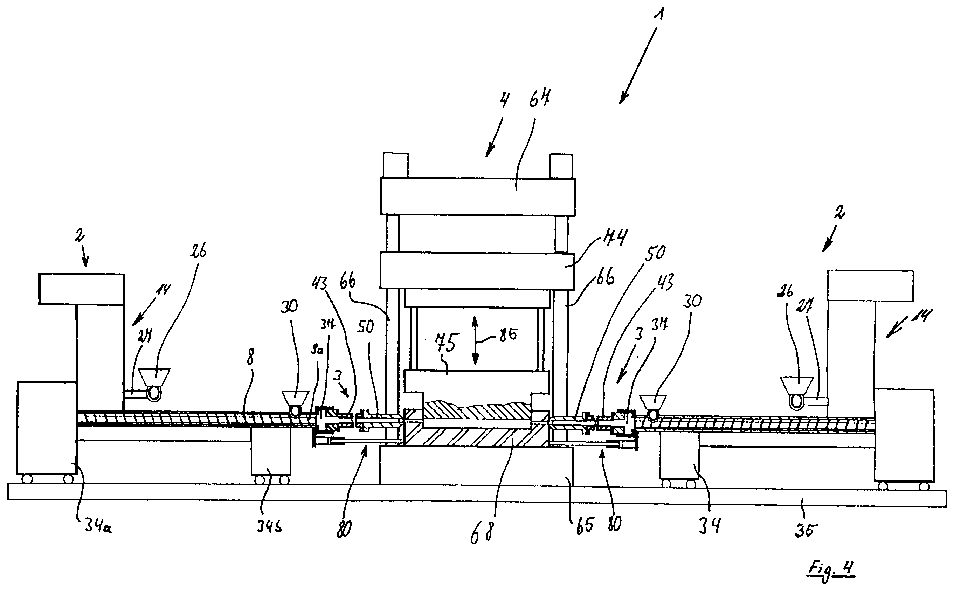

Ähnliche Spritzgießvorrichtungen sind in der DE 43 31 207 A1 beschrieben, die jeweils einen Hohlraum bzw. Akkumulator zum Zwischenspeichern von plastifizierter Formmasse aufweisen. Eine darin beschriebene Ausführungsform (Fig. 4) weist einen als Zwischenspeicher dienenden, integrierten Hohlraum auf. Diese spezielle Spritzgießvorrichtung besitzt eine in einem Speicherzylinder gelagerte Schnecke. Der Speicherzylinder weist an seiner in Förderrichtung vorderen Stirnseite eine Öffnung auf, die durch ein Rückschlagventil verschlossen ist, und verschieblich in einem Einspritzzylinder und auf der Schnecke gelagert ist. Die von der axial stillstehenden Schnecke geförderte Formmasse wird im Speicherzylinder vor dem Schneckenkopf gesammelt, wodurch der Speicherzylinder in Förderrichtung bewegt wird und als Kolben des Einspritzzylinders dessen Volumen verkleinert und hierdurch die Formmasse aus dem Einspritzzylinder in das Formwerkzeugt drückt. Anschließend wird der Speicherzylinder wieder auf die Schnecke zubewegt und die im Speicherzylinder gesammelte Masse tritt durch die Öffnung des Speicherzylinders in den sich vergrößernden Hohlraum des Einspritzzylinders. Nachdem eine ausreichende Menge an Formmasse in den Einspritzzylinder gefördert worden ist, wird der Speicherzylinder in oben beschriebener Weise wieder als Kolben zum Einspritzen der Formmasse aus dem Einspritzzylinder in das Formwerkzeug betätigt.

Aus der JP 60-120024 A ist eine Einspritzvorrichtung bekannt, mit der kleine Mengen von Kunststoff präzise abgemessen in eine Form eingespritzt werden sollen. Gemäß dieser Druckschrift sind für sehr kleine einzuspritzende Mengen üblicherweise auch sehr kleine Schneckendurchmesser erforderlich, wobei bei derartig kleinen Schneckendurchmessern und den bei kleinen Formen üblichen hohen Einspritzdrücken die Gefahr besteht, daß die Schneckengänge brechen können. Um dem abzuhelfen, soll gemäß dieser Druckschrift zwischen dem normal großen Spritzgießzylinder mit Schnecke und der Einspritzdüse mit Nadelventil ein Akkumulator zum Speichern von durch die Schnecke plastifizierter und homogenisierter Kunststoffmasse angeordnet werden, der eine axial verschiebbare Kolbeneinheit, welche mit der Schnecke gekoppelt ist, aufweist. Bei dieser Vorrichtung ist von Nachteil, daß der Kolben und die Schnecke direkt miteinander gekoppelt sind, so daß die Drehbewegung der Schnecke auf den Kolben übertragen wird.

Darüber hinaus ist es bekannt, bei großfomatigen Formen bzw. Formkörpern vor der Einspritzdüse eine sogenannte Heißkanalplatte anzuordnen, die eine Vielzahl Von Kanälen aufweist, wobei die vielen Kanäle an verschiedenen Stellen in den Formenhohlraum münden und so die plastifizierte Masse gleichmäßig in der Form verteilen sollen. Des weiteren ist es bekannt, bei großformatigen bzw. großvolumigen Bauteilen das sogenannte Strangablegeverfahren durchzuführen, bei dem in eine nach oben offene Form mit einer Düse deren Breite der Breite der nach oben offenen Form entspricht, die Kunststoffmasse in die Form eingefüllt wird, wobei die Breitschlitzdüse entsprechend der Ausflußgeschwindigkeit des plastifizierten Kunststoffstranges über die Form fährt, bis diese mit einer Lage plastifizierten Kunststoffs bedeckt ist. Anschließend muß diese Breitschlitzdüse aus dem Bereich der Form gefahren werden, und mit einem Formenoberstempel wird anschließend die Kunststoffmasse in die gewünschte Form gepreßt. Dieses Verfahren wird angewandt, weil die faserverstärkte Kunststoffmasse besonders schonend gefördert wird, da die Ausflußgeschwindigkeiten relativ gering sind.

Beim Spritzpressen wird die Formmasse mit einer Plastifizierungsschnecke bzw. einer üblichen Spritzgießvorrichtung plastifiziert und in eine halbgeschlossene Form eingespritzt. Nachdem die für das gewünschte Formteil benötigte Kunststoffmassenmenge in die halbgeschlossene Form eingespritzt wurde, wird die Form vollständig geschlossen und dabei die Kunststoffmasse mit einem Preßdruck beaufschlagt, so daß sie unter dem Preßdruck in alle Teile der Form gepreßt wird. Beim Spritzpressen wird somit der für die Formgebung benötigte Preßdruck durch die Form aufgebracht, die Spritzvorrichtung muß lediglich den Förderdruck für die Förderung der Kunststoffmasse in die Form aufbringen. Hierbei werden insbesondere Spritzgießvorrichtungen ähnlich der DE 42 37 217 A1 verwendet, also Spritzgießvorrichtungen, bei denen eine axial stillstehende Schnecke in einem Extruder angeordnet ist und durch eine Zuführleitung die plastifizierte Kunststoffmasse in einen oder mehrere separate Einspritzzylinder fördert.

Bei der Herstellung von faserverstärkten Formteilen im Spritzpreßverfahren werden Fasern oder ein Fasercompound im in Einspritzrichtung vorderen Bereich der Schnecke einer derartigen Vorrichtung zudosiert, mit der Kunststoffmasse homogenisiert und dem Einspritzzylinder über die Zuführleitungen zugeführt.

Bei Vorrichtungen, bei denen mit einer axial nicht verschieblichen Schnecke eine Plastifizierung der Kunststoffmasse, Zudosierung und Homogenisierung der Fasern und Förderung der mit Fasern vermischten Masse in einen getrennten Einspritzzylinder und Einspritzung aus dem Zylinder in die Form stattfindet, ist von Nachteil, daß beim Einsatz von Langfaserzusätzen die Anzahl und Länge der Langfasern im fertigen Formteil nicht optimal und nicht beliebig erhöhbar ist. Insbesondere kann eine Erhöhung der Anzahl von Fasern eine Länge über ca. 1 mm (Langfasern) nicht erreicht werden. Dies wird offenbar durch die Umlenkung der Formmasse an vielen Punkten im Leitungssystem zum Einspritzzylinder sowie die hohen Einspritzdrücke verursacht.

Bei Vorrichtungen, bei denen ein mit einer axial vor- und zurücklaufenden Schnecke gekoppelte Akkumulator in Einspritzrichtung axial fluchtend vor der Schnecke angeordnet ist, ist von Nachteil, daß die Verteilung der Fasern im Kunststoff stark schwankt und die Faserlänge ebenfalls stark schwankt, wobei die gewünschte Faserlänge im fertigen Bauteil nicht erreicht, sondern vielmehr unterschritten wird.

Bei Spritzgießverfahren für großvolumige Bauteile mittels einer in den Formenboden integrierten Heißkanalplatte ist von Nachteil, daß durch die Heißkanäle eine vielfache Umleitung der Kunststoffmasse erfolgt. Zudem sind die Strömungsgeschwindigkeiten und der Spritzdruck in der Spritzdüse und in den nachgeordneten Heißkanälen besonders hoch, so daß faserverstärkte Kunststoffmassen mit diesem Verfahren schlecht bis gar nicht verarbeitbar sind.

Beim Strangablegeverfahren ist von Nachteil, daß mit einer liegenden, nach oben offenen Form gearbeitet werden muß, was einen erheblichen Entformungsaufwand des fertigen Bauteils verursacht, da dieses aus der Form gehoben werden muß. Zudem muß die Breitschlitzstrang-Ablegedüse vor dem Pressen aus dem Bereich der Pressen gefahren werden, was zum einen erheblichen maschinellen Aufwand verursacht und zum anderen die Produktionsgeschwindigkeit gegenüber den anderen Verfahren senkt.

Aufgabe der Erfindung ist es, ein Verfahren zum Spritzpressen von faserverstärkten Formteilen sowie eine Vorrichtung zum Durchführen des Verfahrens zu schaffen, mit dem größere Faserlängen und eine homogene Verteilung der Fasern im Formteil, insbesondere auch in großvolumigen Formteilen, erreicht werden.

Die Aufgabe wird mit einem Verfahren mit den Merkmalen des Anspruchs 1 sowie einer Vorrichtung mit den Merkmalen des Anspruchs 14 gelöst. Vorteilhafte Ausführungsformen sind in Unteransprüchen gekennzeichnet.

Erfindungsgemäß wird eine axiale, im Extrudergehäuse stillstehende Schnecke für die Plastifizierung der Kunststoffmasse verwendet, wobei die Fasern lose oder als Compound der plastifizierten Kunststoffmasse zudosiert werden. Die Zudosierung erfolgt dabei in einer Entfernung vor dem Schneckenkopf, die eine ausreichende Homogenisierung der Fasern in der Kunststoffmasse auf dem Weg zum Schneckenkopf gewährleistet. Das Extrudergehäuse bildet in Förderrichtung vor dem Schneckenkopf einen Hohlzylinder aus, der einen gleichen oder weiteren Durchmesser als das Extrudergehäuse im Bereich der Schnecke aufweisen kann. Dem Schneckenkopf gegenüberliegend ist ein Kolben formschlüssig in dem Zylinder eingepaßt bzw. angeordnet. Der Kolben weist einen axialen zentralen Durchgang auf, welcher in eine axiale, röhrenförmige Leitung zu einem Einspritzventil mit Einspritzdüse übergeht, welches in ein Formwerkzeug mündet. Das Ventil bzw. das Ventilstück sind fest mit der Form verbunden.

Um eine Vergrößerung und Verkleinerung des Zylindervolumens zu erreichen, wird die gesamte Extrudereinheit mit Extrudergehäuse, Extruderschnecke, daran angeordneten Zudosier- bzw. Zumisch- oder Zerkleinerungsaggregaten sowie dem Drehantrieb für die Schnecke axial bewegt. Hierfür ist diese gesamte Maschineneinheit auf Rollen oder Schienen, vorzugsweise auf einem gemeinsamen Fundamentaufbau mit Rollen oder Schienen axial verschieblich gelagert. Eine Vergrößerung des Volumens wird vorzugsweise dadurch erreicht, daß bei geschlossenem Einspritzventil die Schnecke plastifizierte Masse in den Zylinder fördert und dadurch die gesamte Einheit vom Kolben und der Form wegdrückt. Eine Verkleinerung des Zylindervolumens wird durch eine Hydraulik erreicht, die die Extrudereinheit bei geöffnetem Einspritzventil auf den Kolben zubewegt, indem sie zieht oder drückt. Hierdurch wird die Masse durch den zentralen axialen Durchgang im Kolben und die Zuführröhre bzw. -leitung durch das Ventil in die Form gefördert bzw. gespritzt. Anschließend wird das Ventil geschlossen und die Masse in der Form in an sich bekannter Weise mit einem Preßdruck beaufschlagt. Das Ventil ist vorzugsweise ein Nadelventil, welches schräg zur Förderrichtung bzw. zur Förderleitung angeordnet und mit einem außerhalb des Ventilstücks angeordneten Ventilantrieb versehen ist. Während der Förderung von Kunststoffmasse durch die axiale Röhre oder Leitung ragt die Ventilnadel nur zu einem geringen Teil vorzugsweise gar nicht in die Förderröhre bzw. in den Bereich der Einspritzdüse.

Durch die im Gehäuse axial unbeweglich gelagerte Schnecke wird eine Belastung der Kunststoffmasse und der darin befindlichen Fasern durch Scherung im Bereich der Fasereinfüllöffnung sowie Friktion und Scherung an der Gehäuseinnenwandung und den Schneckengängen und dadurch die Faserkürzung in diesem Bereich im Gegensatz zur axial beweglichen Schnecken vermindert.

Dadurch, daß im Bereich des Schneckenkopfes die faserhaltige Kunststoffmasse nicht durch einen schmalen Durchgang oder Durchlaß, sondern direkt - in Schneckendurchmesserdicke - in den Zylinder gefördert wird, werden hohe Strömungsgeschwindigkeiten und damit auch hohe Drücke sowie lange Wege zwischen Schnecke und Zylinder und damit Kürzungen der Fasern vermieden.

Durch das Spritzpressen in eine halbgeöffnete Form in Verbindung mit der erfingungsgemäßen Ausgestaltung der Plastifizierungs- und Spritzeinrichtung wird der Spritzdruck gegenüber dem Spritzgießen und bekannten Spritzpreßvorrichtungen stark verringert, so daß die Belastung der Kunststoffmasse und damit der Fasern insbesondere im Bereich des Einspritzventils bzw. des Mundstücks bzw. der Einspritzdüse, aber auch in der Form stark verringert wird.

Durch das Vorsehen eines geraden Spritzkanals mit einem schräg zur Spritzrichtung angeordneten Nadelventil werden lange und gewinkelte Wege der Formmasse sowie eine die Formmasse belastende Umströmung von Festkörpern eines axial angeordneten Nadelventils vermieden und somit die Belastung der Masse bzw. der Fasern weiter verringert.

Im folgenden wird die Erfindung anhand einer Zeichnung beispielhaft erläutert. Es zeigen:

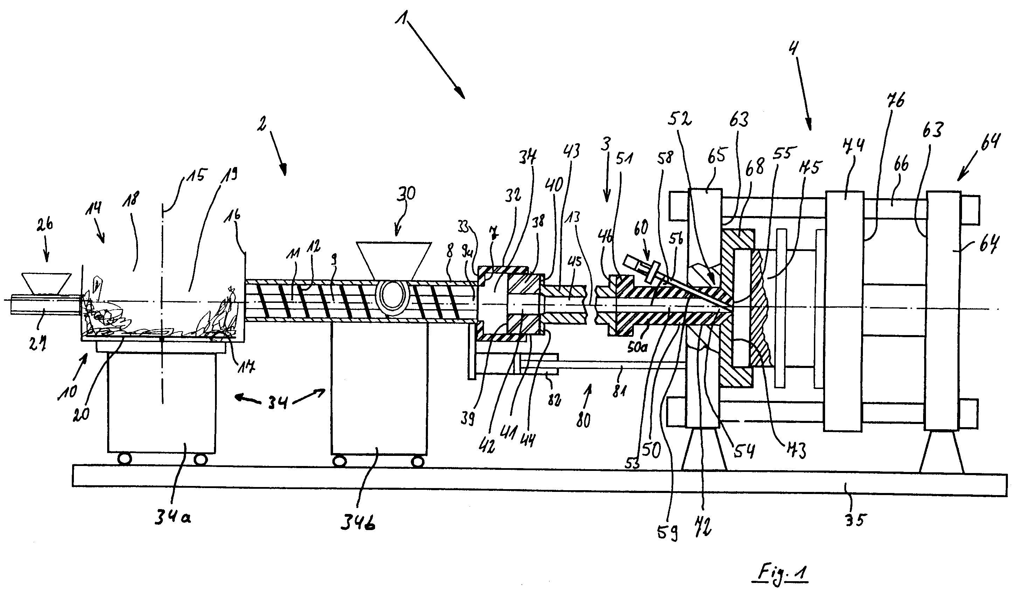

- Fig. 1: eine erfindungsgemäße Vorrichtung in einer teilgeschnittenen Seitenansicht;
- Fig. 2: eine schematisierte vergrößerte Darstellung des Injektors, des Einlaufstutzens und der Verschlußdüse mit Ventil nach Fig. 1;
- Fig. 3: eine weitere Ausführungsform einer erfindungsgemäßen Vorrichtung zum Spritzpressen mit zwei an einer Form sich gegenüberliegenden Extrudereinheiten in einer Draufsicht mit einer stehenden Form;
- Fig. 4: die Vorrichtung gemäß Figur 3 in einer seitlichen geschnittenen Ansicht, mit einer liegenden Form;
- Fig. 5a, 5b, 5c: eine Spritzgießvorrichtung gemäß dem Stand der Technik.

Die erfindungsgemäße Vorrichtung 1 zum Spritzpressen von faserverstärkten Kunststoffen weist hintereinander angeordnet einen Plastifizierungsbereich 2, einen Einspritzbereich 3 und einen Formgebungsbereich 4 auf.

Die Plastifizierungseinheit weist ein länglich hohlzylindrisch röhrenförmiges Extrudergehäuse 8 mit einer darin drehbar gelagerten Extruderschnecke 9 auf.

An einem Ende 10 des röhrenförmigen Extrudergehäuses 8 ist ein an sich bekannter Drehantrieb (nicht gezeigt) zum Drehen der Schnecke 9 im Gehäuse 8 angeordnet. Die Schnecke 9 weist einen im wesentlichen langgestreckten zylindrischen Schneckenkern 11 und helixförmig darum angeordneten Schneckengänge 12 auf. Von dem antriebsseitigen Ende 10 erstreckt sich die Extruderschnecke 9 durch das Extrudergehäuse 8 nach vorne bis zu einem Schneckenkopf 9a. Das Extrudergehäuseende 10, an dem der Drehantrieb angeordnet ist, stellt in Förderrichtung der Schnecke 9 gesehen ein hinteres Ende 10 dar. Der Drehsinn der Schnecke 9 ist so gewählt, daß die Schnecke 9 zu förderndes Gut von diesem Ende weg nach vorne fördert. Das Extrudergehäuse 8 sowie die Schnecke 9 sind liegend angeordnet, d.h. die gemeinsame Längsachse 13 ist vorzugsweise horizontal orientiert.

Im Bereich des hinteren Endes 10 des Extrudergehäuses 8 ist ein Schredder 14 angeordnet. Der Schredder 14 dient der Zuführung von zu plastifizierendem Gut zur Extruderschnecke 9 und ist ein hohlzylindrischer Körper, der mit seiner Längsachse 15 senkrecht zur Achse 13 des Extrudergehäuses 8 und der Schnecke 9 orientiert ist.

Der Schredder 14 weist eine Mantelwandung 16, eine Bodenwandung 17 und eine obere, der Bodenwandung 17 gegenüberliegende Öffnung 18 auf. Von der Bodenwandung 17 ist gering beabstandet im Schredderhohlraum 19 eine Kreisscheibe 20 axial zentral angeordnet, deren Durchmesser etwas geringer ist als der Innendurchmesser des Schredders 14. Die Kreisscheibe 20 ist um die Längsachse 15 drehbar und kann zur Öffnung des Schredders 14 weisende Messer (nicht gezeigt) aufweisen. Zur Öffnung 18 hin, ein Stück von der Scheibe 20 beabstandet, ist in der Mantelwandung 16 eine senkrecht zur Längsachse 15 orientierte, tangentiale zylinderabschnittsförmige Öffnung 23 angeordnet, deren Zylinderradius dem Zylinderradius des Extrudergehäuses 8 entspricht. In dem Extrudergehäuse 8 ist im Bereich der Öffnung 23 des Schredders 14 eine zu dieser Öffnung korrespondierende, senkrecht zur Längsachse 13 orientierte zylinderabschnittsförmige Öffnung 24 angeordnet, deren Zylinderradius dem Zylinderradius der Mantelwandung 16 des Schredders 14 entspricht. Der Schredder 14 ist mit der Öffnung 23 an die Öffnung 24 des Extrudergehäuses 8 angesetzt, wobei die die Öffnungen 23, 24 begrenzenden Ränder aufeinander liegen. Hierdurch ist die Extruderschnecke 9 im Bereich der Öffnungen 23, 24 tangential und mit einer Teilbreite in den Hohlraum 19 des Schredders 14 hineinragend angeordnet.

An dem Schredder 14 bzw. seinem Mantel 16 ist eine Dosiereinheit 26 für Additive, insbesondere mineralische Additive angeordnet, welche über einen Zuführungstutzen 17 die Additive oberhalb der Scheibe 20 und auf einem höheren Niveau als dem der Öffnungen 23, 24 dem zu schreddernden Gut zuführt.

In Förderrichtung der Schnecke 9 vom Schredder 14 und dem Schneckenkopf 9a beabstandet ist eine Zudosiereinheit 30 für Fasern am Extrudergehäuse 8 derart angeordnet, daß zu dosierende Fasern von der Schnecke 9 eingezogen bzw. in den Bereich der Schnecke 9 gegeben werden können. Die Fasern werden vorzugsweise in einem Dekompressionsbereich der Schnecke 9 zudosiert, wobei der Abstand der Zudosiereinheit 30 zum Schneckenkopf 9a so gewählt ist, daß eine ausreichende Homogenisierung der Fasern auf dem Weg von der Zudosiereinheit 30 bis zum Schneckenkopf 9a erzielt wird.

Das Extrudergehäuse 8 steht über den Kopf 9a der Schnecke 9 ein Stück vor, wobei sich der über den Schneckenkopf 9a nach vorne hinausstehende Teil 32 des Gehäuses 8 auf Höhe des Schneckenkopfes 9a mit einer Stufe 33 erweitert. Der erweiterte Teil bildet einen Hohlzylinder 32 aus, der einen größeren Durchmesser aufweist als das um die Schnecke 9 angeordnete Extrudergehäuse 8.

Die Plastifizierungseinheit 2, bestehend aus dem Extrudergehäuse 8, der Extruderschnecke 9, dem Schredder 14 mit Additiv-Zudosiereinheit 26 sowie dem hohlzylindrischen Teil 32 und der Faserzudosiereinheit 30 ist auf einem gemeinsamen Maschinenträger bzw. Maschinenfundament 34 angeordnet, wobei das Maschinenfundament zweiteilig mit einem hinteren Teil 34a, der im Bereich des Schredders 14 angeordnet ist, und einem vorderen Teil 34b, der im Bereich der Faserzudosiereinheit 30 angeordnet ist, ausgebildet sein kann. Das Maschinenfundament 34 ist in Längsrichtung des Extrudergehäuses 8 bzw. der Schnecke 9 bzw. in Förderrichtung der Schnecke 9 verschieblich auf einer Bodenplatte 35 gelagert.

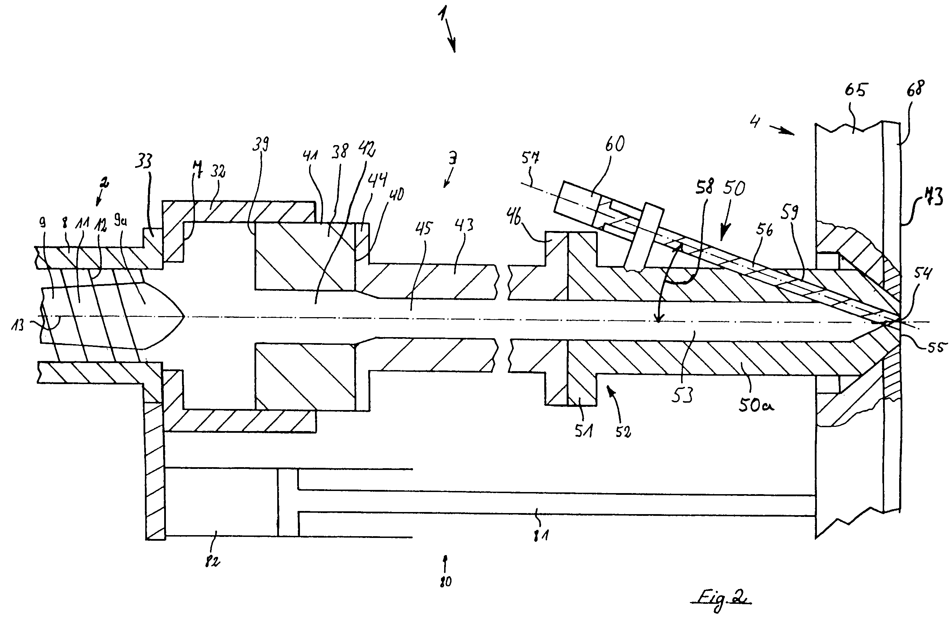

Der Hohlzylinder 32 kann einstückig am Extrudergehäuse 8 angeformt sein, er kann jedoch auch als separates Bauteil ausgebildet sein, welches an einem nach außen vorstehenden, ringstegförmigen Flansch 33 des Extrudergehäuses 8 auf Höhe des Schneckenkopfes 9 angeordnet ist (Fig. 2). In dem Hohlzylinder 32 ist ein Kolben 40 formschlüssig und längsverschieblich angeordnet, wobei der Kolben 38 bezüglich der Längsachse 13 etwa eine Länge aufweist, die der Länge des vom Extrudergehäuse 8 vorstehenden Hohlzylinders 32 entspricht. Der Kolben 38 weist eine der Extruderschnecke 9 zugewandte Kolbenstirnfläche 39, einen von der Extruderschnecke 9 weg weisenden Kolbenboden 40 und eine Kolbenmantelwandung 41 auf. In den Kolben 38 ist ein axial zentraler Durchlaß 42 eingebracht, der sich von der Kolbenstirnfläche 39 durch den Kolben 38 zum Kolbenboden 40 erstreckt. Der Durchlaß 42 weist eine Weite auf, die vorzugsweise geringer ist als die innere Weite des Extrudergehäuses 8 bzw. des Durchmessers der Extruderschnecke 9. Der Hohlzylinder 32 und der Kolben 38 bilden einen Einspritzzylinder 37.

Am Kolbenboden 40 ist ein zylindrischer Einlaufstutzen 43 mit einem ringstegförmigen Flansch 44 axial fluchtend zum Kolben 38 angeordnet. Der Einlaufstutzen 43 weist einen Durchmesser auf, der geringer ist als der Durchmesser des Kolbens 38, wobei der Ringstegflansch 44 einen äußeren Durchmesser aufweisen kann, der dem des Kolbens 38 entspricht. Axial fluchtend zum Durchlaß 42 des Kolbens 38 ist in dem Einlaufstutzen 43 ein zentral axial fluchtender Durchlaß 45 eingebracht, so daß der Einlaufstutzen 43 als Hohlzylinder ausgebildet ist. Der Durchlaß 45 kann eine Weite aufweisen, die der des Durchlasses 42 entspricht. Vorzugsweise verengt sich der Durchlaß 45 im Bereich des Ringstegflansches 44 von einem Durchmesser bzw. einer Weite, die der des Durchlasses 42 entspricht, auf ein etwas geringeres Maß. An der dem Ringstegflansch 44 axial gegenüberliegenden Seite des Einlaufstutzens 43 weist der Einlaufstutzen 43 einen weiteren Ringstegflansch 46, der nach außen vorsteht, auf.

An dem Ringstegflansch 46 anschließend ist eine Einspritzdüse 50 mit einem an dem Ringstegflansch 46 axial anliegenden Ringstegflansch 51 angeordnet. Die Einspritzdüse 50 erstreckt sich von dem Ringstegflansch 51 in axialer Richtung und in Förderrichtung nach vorne und ist ein im wesentlichen zylindrischer Körper, der einen Außendurchmesser aufweist, der dem des Einlaufstutzens 43 entspricht.

An dem dem Einlaufstutzen 43 bzw. dem Ringstegflansch 53 gegenüberliegenden Ende 52 verjüngt sich die Einspritzdüse 50. Die Einspritzdüse 50 weist einen axialen zentralen Durchlaß 53 auf, welcher im Bereich des Ringstegflansches 51 dem Durchmesser des Durchlasses 45 entspricht. Im Bereich des Endes 52 der Einspritzdüse 50 verengt sich der Durchlaß 53 entsprechend der Verjüngung der Einspritzdüse am Ende 52 zu einer Einspritzdüsenmündung 54, deren Durchmesser ein Drittel bis die Hälfte des Durchmessers bzw. der Weite des Durchlasses 53 aufweist.

Die Mündung 54 der Einspritzdüse 50 kann mit der Vorderkante 55 der Düse 50 bzw. der Mündung 54 abschließend mit einer länglich zylindrischen Nadel 56 verschlossen werden. Die Nadel 56 ist schräg zur Längsachse 13 und der Einspritzdüse 50 angeordnet, wobei ihre Längsachse 57 mit der Längsachse 13 einen gegen die Förderrichtung geöffneten spitzen Winkel 58 einschließt. Die Nadel 56 ist in einem Nadelkanal 59 in der Zylinderwandung 50a der Düse 50 axial verschieblich geführt, wobei der Nadelkanal 59 eine sich von der Mündung 54 schräg zur Längsachse 13 entgegen der Förderrichtung nach außen erstreckende Bohrung 59 ist. Der Nadelkanal 59 und die Mündung 54 weisen einen identischen Innendurchmesser auf. Außerhalb der Zylinderwandung 50a der Einspritzdüse 50 ist ein z.B. hydraulischer Nadelantrieb 60 an der Zylinderwandung 50a angeordnet, welcher die Nadel 56 entlang ihrer Längsachse 57 verschieben kann.

Das Extrudergehäuse 8 sowie der Einspritzbereich 3 sind von außen in an sich bekannter und üblicher Weise beheizt.

In Förderrichtung vor der Einspritzeinheit 2 ist der Formgebungsbereich 3 angeordnet. Der Formgebungsbereich 3 weist einen Formenrahmen 64 mit zwei aufrecht stehenden quadratisch plattenförmigen Querhäuptern 65, 67 auf, die sich mit Flachseiten 63 gegenüberliegend mit vier je in den Eckenbereichen angeordneten zylindrischen Holmen oder Säulen 66 verbunden sind. Die plattenförmigen Querhäupter 65, 67 sind mit ihren Plattenebenen senkrecht zur Längsachse 13 orientiert. Die Säulen 66 sind parallel beabstandet zur Längsachse 13 angeordnet.

Das dem Einspritzbereich 2 zugewandte Querhaupt 65 dient als feststehende Formentischplatte 65, an deren Flachseite 63 ein Formwerkzeug 68 angeordnet ist. Die Formtischplatte 65 und das Formwerkzeug 68 weisen entlang der Längsachse 13 eine axiale zentrale Aussparung 72 auf, die der äußeren Form der Mündung 54 und der Einspritzdüse 50 soweit angepaßt ist, daß die Einspritzdüse 50 senkrecht zur Plattenebene in der Formtischplatte 65 und dem Formwerkzeug 68 eingesteckt ruht, wobei die Vorderkante 55 der Einspritzdüse 50 bzw. die Mündung 54 mit der zu einem Formteil weisenden Formwerkzeugplatten-Innenfläche 73 bündig abschließt.

Zwischen den Querhäuptern 65, 67 ist ein beweglicher Formentisch 74 mit einem dem Formwerkzeug 68 zugewandten korrespondierenden Formenwerkzeug 75 angeordnet. Auf seiner dem Formwerkzeug 75 abgewandten Seite 76 ist der Formentisch 74 mit dem in Förderrichtung vorderen Querhaupt 67 über einen hydraulischen Antrieb (nicht gezeigt) verbunden.

Das Formwerkzeug 75 kann mit dem beweglichen Formentisch 74 auf das gegenüberliegende korrespondierende Formwerkzeug 68 zu und von ihm weg bewegt werden. Der gesamte Formenbereich 4 bzw. Formenrahmen 64 ist mit der Bodenplatte bzw. dem Gebäudefundament 35 fest verbunden, so daß auch die Einspritzeinheit 3 mit Kolben 38, dem Einlaufstutzen 43 sowie Einspritzdüse 50 ortsfest angeordnet ist. Die Einspritzeinheit 3 kann neben dem Querhaupt 65 auch in der Formtischplatte auch an weiteren Teilen des Rahmens 64 der Formgebungseinheit 4 befestigt sein.

Zwischen dem die Einspritzeinheit 3 aufweisenden Querhaupt 65 und der beweglichen Plastifizierungseinheit 2 ist ein hydraulischer Antrieb 80 angeordnet, der es ermöglicht, die bewegliche Plastifizierungseinheit 2 auf das Querhaupt 65 zu zubewegen. Diese hydraulische Bewegungseinrichtung 80 ist üblicherweise eine Kolbenzylinderanordnung, wobei eine Kolbenstange 81 an dem Querhaupt 65 bzw. dem Rahmen 64 und dem Zylinder 82 am Extrudergehäuse 8 angreift.

Im folgenden wir die Funktionsweise einer derartigen Vorrichtung erläutert. Im Ausgangszustand ist die Plastifizierungseinheit 2 in einer vorgeschobenen, der Einspritzeinheit 3 nächstliegenden Stellung, angeordnet, wobei die Kolbenstirnfläche 39 an einer vorderen Stirnwand 7 des Extrudergehäuses anliegt. Die Scheibe 20 im Schredder 14 wird in Drehung versetzt und zu plastifizierendes Material zugefügt. Das zu plastifizierende Material wird mit den Schreddermessern geschnitten und durch die Fliehkraft von innen an die Mantelwandung 16 gedrückt. Durch den Stutzen 27 wird mineralisches Additiv zu dem entlang der Mantelinnenwandung 16 bewegten Schreddergut gegeben und im Schreddergut homogen verteilt. Im Schredder 14 findet eine Zerkleinerung, Homogenisierung und Vorerwärmung des zu plastifizierenden Guts zusammen mit den Additiven statt. Mit der Schnecke 9 wird das zu plastifizierende Gut in das Extrudergehäuse 8 eingezogen, wobei das Extrudergehäuse 8 beheizt ist. Durch die Einwirkung von Wärme und Scherkräften wird das aus dem Schredder 14 abgezogene Gut plastifiziert. Vorzugsweise wird der Kern 11 der Schnecke 9 bis zur Zudosiereinheit 30 für Fasern bei gleichbleibendem Schneckengesamtdurchmesser bzw. bei gleichbleibender Extrudergehäuseinnenweite dicker, so daß auf die zu plastifizierende Masse durch ein sich stetig verkleinerndes Volumen ein Druck ausgeüht wird (Kompressionsbereich), wodurch Wärme erzeugt wird und die Masse zusätzlich plastifiziert wird. Im Bereich der Zudosiereinheit für die Fasern nimmt der Kerndurchmesser vorzugsweise wieder ab, so daß die Masse dekomprimiert wird (Dekompressionsbereich) und die zudosierten Fasern leichter aufgenommen werden können. Im weiteren Verlauf bis zum Schneckenkopf 9a kann durch eine Verdickung des Schneckenkerns 11 eine erneute Kompression der Masse stattfinden. Die plastifizierte Masse wird am Schneckenkopf 9a in den erweiterten, vorstehenden hohlyzlindrischen Teil 32 bzw. Einspritzzylinder 37, den Durchlaß 42 im Kolben 38, den Durchlaß 45 im Einlaufstutzen 43 und in den Durchlaß 53 der Einsprizdüse bis zur durch die Nadel verschlossenen Mündung gefüllt. Ist dieses Volumen mit plastifizierter Masse aufgefüllt und wird weiter mit der Schnecke 9 gefördert, wird durch das zunehmende Volumen im Hohlzylinder 32 bzw. Einspritzzylinder 37 an der plastifizierten Masse ein Druck auf den Kolben 38 ausgeübt, so daß die axial verschiebliche Plastifizierungseinheit 2 vom Kolben weggedrückt wird. Entspricht das Volumen im Einspritzzylinder 37 einer gewünschten einzupritzenden Menge, wird die Plastifizierungseinheit 2 mit dem hydraulischen Antrieb 80 zwischen Plastifizierungseinheit 2 und Querhaupt 65 auf das Querhaupt zu bewegt und gleichzeitig die Nadel 56 aus dem Mündungsbereich hinaus bewegt.

Selbstverständlich kann auch der Kolben 38 am Extrudergehäuse 8 und der Zylinder 32 am Einlaufstutzen 43 angeordnet sein, da die Wirkungsweise des Einspritzzylinders 37 sich hierdurch nicht ändert.

Aus der Mündung 54 der Einspritzdüse 50 fließt die plastifizierte Masse nun in die halbgefüllte Form. Ist die gewünschte plastifizierte Masse in die Form eingespritzt, wird das Nadelventil wieder geschlossen und der bewegliche Formentisch 74 auf die feste Formtischplatte 65 zugefahren, wodurch ein Druck auf die Masse ausgeübt wird, welche sie dazu veranlaßt, in die gesamte Form zu fließen. Nachdem die Masse erstarrt ist, wird die Form geöffnet und das Formteil kann der Schwerkraft folgend nach unten aus der Form fallen.

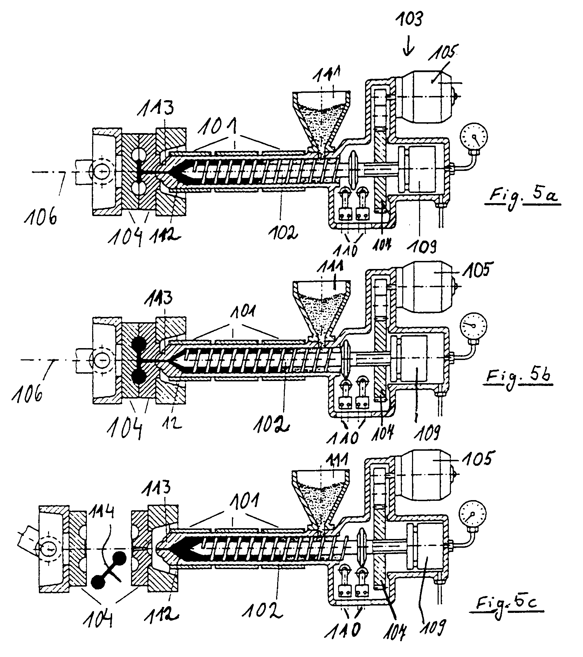

Bei einer weiteren vorteilhaften Ausführungsform einer erfindungsgemäßen Vorrichtung (Fig. 4, 5) sind zwei erfindungsgemäße Plastifizierungseinheiten 2 mit Einspritzeinheit 3, bezogen auf eine Preßrichtung 85 des Formgebungsbereichs 4, senkrecht an dem starren Querhaupt 65 angeordnet. Diese Ausführungsform wird bevorzugt bei besonders großen Formteilvolumen eingesetzt, wobei die Spritzdüse 50 keinen runden Querschnitt hat, sondern eine sogenannte Breitschlitzdüse ist, bei der die Breite der Mündung 54 etwa ein Drittel der Formenbreite beträgt. Bei derartig großen Formteilvolumen wird bei Verwendung von faserverstärkten Kunststoffmassen üblicherweise das sogenannte Strangablegeverfahren eingesetzt.

Ein Schredder 14 findet nur dann Anwendung, wenn zu zerkleinerndes Ausgangsmaterial, insbesondere Kunststoffabfall oder Recyclingkunststoff, verwendet wird. Bei der Verwendung herkömmlicher Granulate od.dgl. als Kunststoffausgangsmaterial kann dieses Material auf herkömmliche Weise der Schnecke zugegeben werden.

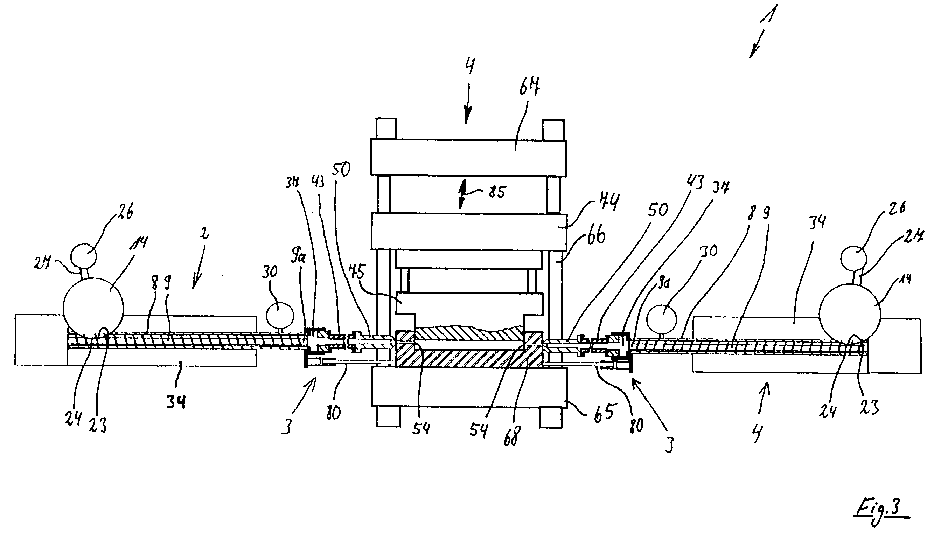

Durch das Vorsehen zweier erfindungsgemäßer Plastifizier- und Einspritzvorrichtungen mit je einer Breitschlitzdüse ist es möglich, die faserverstärkte Kunststoffmasse schonende und ausreichend langsam, jedoch bei einem sehr hohen Massestrom in eine großvolumige Form einzubringen und gleichzeitig die Taktraten gegenüber dem Strangablegeverfahren erheblich zu erhöhen, da in eine halb geschlossene Form eingefüllt wird, so daß eine zwischen zwei Werkzeughälften operierende Breitschlitzdüse nicht notwendig ist. Darüber hinaus kann bei einer halb geschlossenen Form die Form aufrecht gestellt werden (Fig. 3), so daß die Preßrichtung nicht vertikal, sondern horizontal ist. Hierdurch wird auch das Entformen erheblich beschleunigt, da das Bauteil der Schwerkraft folgend aus der Form fallen kann. Bei einer zweiten Ausführungsform wird eine liegende Form verwendet, d.h. die Plattenebenen der Querhäupter 65, 67 sind horizontal orientiert und die Preßrichtung ist vertikal orientiert.

Durch die im Gehäuse axial unbeweglich gelagerte Schnecke wird eine Belastung der Kunststoffmasse und der darin befindlichen Fasern durch Scherung im Bereich der Fasereinfüllöffnung sowie Friktion und Scherung an der Gehäuseinnenwandung und den Schneckengängen und dadurch die Faserkürzung in diesem Bereich im Gegensatz zur axial beweglichen Schnecken vermindert.

Dadurch, daß im Bereich des Schneckenkopfes die faserhaltige Kunststoffmasse nicht durch einen schmalen Durchgang oder Durchlaß, sondern direkt - in Schneckendurchmesserdicke - in den Zylinder gefördert wird, werden hohe Strömungsgeschwindigkeiten und damit auch hohe Drücke sowie lange Wege zwischen Schnecke und Zylinder und damit Kürzungen der Fasern vermieden.

Durch das Spritzpressen in eine halbgeöffnete Form in Verbindung mit der erfingungsgemäßen Ausgestaltung der Plastifizierungs- und Spritzeinrichtung wird der Spritzdruck gegenüber dem Spritzgießen und bekannten Spritzpreßvorrichtungen stark verringert, so daß die Belastung der Kunststoffmasse und damit der Fasern insbesondere im Bereich des Einspritzventils bzw. des Mundstücks bzw. der Einspritzdüse, aber auch in der Form stark verringert wird.

Durch das Vorsehen eines geraden Spritzkanals mit einem schräg zur Spritzrichtung angeordneten Nadelventil werden lange und gewinkelte Wege der Formmasse sowie eine die Formmasse belastende Umströmung von Festkörpern eines axial angeordneten Nadelventils vermieden und somit die Belastung der Masse bzw. der Fasern weiter verringert.

## Patentansprüche

1. Verfahren zum Spritzpressen von faserverstärkten Kunststoffen, wobei
a) ein Kunststoffausgangsmaterial, z.B. zerkleinertes oder granuliertes Kunststoffausgangsmaterial einer Plastifizierungseinrichtung (2), bestehend aus einem Extrudergehäuse (8) und einer sich im Extrudergehäuse (8) um eine Längsachse (13) drehenden Extruderschnecke (9) aufgegeben und in der Plastifizierungseinrichtung (2) plastifiziert und in Richtung eines Formwerkzeuges gefördert wird,
b) im Bereich der Plastifizierungseinrichtung (2) zu der plastifizierten Masse Fasermaterial zugegeben und beim weiteren Transportieren in der Plastifizierungseinrichtung (2) mit der plastifizierten Kunststoffmasse vermischt wird,
c) die plastifizierte, Fasern enthaltende Masse einer Einspritzeinrichtung (37) zugeführt wird und mit der Einspritzeinrichtung (37) durch eine Einspritzdüse (50) in ein aus mindestens zwei Teilen (68, 75) gebildeten Formwerkzeug eingespritzt und anschließend im Formwerkzeug zu einem Formling gepreßt wird,
**dadurch gekennzeichnet,**
daß die plastifizierte Masse zumindest nach der Zugabe des Fasermaterials entlang einer gerade verlaufenden Transportstrecke im Bereich einer zentralen Längsachse (13) der Plastifizierungseinrichtung (2), der Einspritzeinrichtung (37) und der Einspritzdüse (50) bis zum Formwerkzeug gefördert wird.

2. Verfahren nach Anspruch 1,
**dadurch gekennzeichnet,**
daß Förderwege für die plastifizierte, Fasern enthaltende Masse verwendet werden, die im Bereich der zentralen Längsachse (13) keine von der Masse zu umfließenden Hindernisse aufweisen.

3. Verfahren nach Anspruch 1 und/oder 2,
**dadurch gekennzeichnet,**
daß das Fasermaterial in einem Dekompressionsbereich der Plastifizierungseinheit der plastifizierten Masse zugegeben wird.

4. Verfahren nach einem oder mehreren der Ansprüche 1 bis 3,
**dadurch gekennzeichnet,**
daß die plastifizierte Masse vor der Faserzugabe komprimiert wird.

5. Verfahren nach einem oder mehreren der Ansprüche 1 bis 4,
**dadurch gekennzeichnet,**
daß die faserhaltige Masse nach der Faserzugabe komprimiert wird.

6. Verfahren nach einem oder mehreren der Ansprüche 1 bis 5,
**dadurch gekennzeichnet,**
daß dem Kunststoffausgangsmaterial in einem Schredder (14) zerkleinert wird und während der Zerkleinerung im Schredder (14) Additive zugegeben werden.

7. Verfahren nach Anspruch 6,
**dadurch gekennzeichnet,**
daß mineralische Additive zugegeben werden.

8. Verfahren nach einem oder mehreren der Ansprüche 1 bis 7,
**dadurch gekennzeichnet,**
daß mit einer axial unbeweglichen Schnecke gefördert wird.

9. Verfahren nach einem oder mehreren der Ansprüche 1 bis 8,
**dadurch gekennzeichnet,**
daß mit zwei an einer Form sich gegenüberliegenden Plastifizierungs-und Einspritzvorrichtungen (2, 3) in die Form eingespritzt wird.

10. Verfahren nach einem oder mehreren der Ansprüche 1 bis 9,
**dadurch gekennzeichnet,**
daß das plastifizierte Material durch eine Breitschlitzdüse in die Form eingespritzt wird.

11. Verfahren nach einem oder mehreren der Ansprüche 1 bis 10
**dadurch gekennzeichnet,**
daß als Fasermaterial geschnittene Fasern zugegeben werden.

12. Verfahren nach einem oder mehreren der vorhergehenden Ansprüche,
**dadurch gekennzeichnet,**
daß ein Fasercompound bestehend aus mit Kunststoff beschichteten Fasern zugegeben wird.

13. Verfahren nach einem oder mehreren der vorhergehenden Ansprüche,
**dadurch gekennzeichnet,**
daß Glasfasern zugegeben werden.

14. Verfahren nach einem oder mehreren der Ansprüche 1 bis 12,
**dadurch gekennzeichnet,**
daß Kohlenstoffasern zugegeben werden.

15. Verfahren nach einem oder mehreren der Ansprüche 1 bis 14,
**dadurch gekennzeichnet,**
daß Fasern mit einer Länge von 0,5 mm bis 20 mm verwendet werden.

16. Verfahren nach Anspruch 15,
**dadurch gekennzeichnet,**
daß Fasern mit einer Länge von 1 bis 10 mm verwendet werden.

17. Verfahren nach einem oder mehreren der Ansprüche 1 bis 16,
**dadurch gekennzeichnet,**
daß als Kunststoffausgangsmaterial ein Kunststoffrecyclingmaterial, insbesondere Kunststoffabfälle, verwendet werden.

18. Vorrichtung zum Spritzpressen von faserverstärkten Kunststoffen, insbesondere zum Durchführen eines Verfahrens nach einem oder mehreren der Ansprüche 1 bis 17, mit
a) einer ein Extrudergehäuse (8) und eine im Extrudergehäuse (8) um eine Längsachse (13) drehbar angeordneten Extruderschnecke (9) aufweisenden Plastifizierungseinrichtung (2),
b) einer Dosiereinrichtung (30) für Fasermaterial,
c) einer einen Einspritzzylinder (32), einen Einspritzkolben (38) und eine Einspritzdüse (50) aufweisenden Einspritzeinrichtung (3) und
d) einem Preßformwerkzeug mit aufeinander zu bewegbar angeordneten Formwerkzeughälften (68, 75),
**dadurch gekennzeichnet,**
daß die Plastifizierungseinrichtung (2) mit Extrudergehäuse (8) und darin gelagerter Extruderschnecke (9), die Einspritzeinrichtung (3) sowie die Einspritzdüse (50) und ggf. dazwischen angeordnete Förderstrecken hintereinander entlang einer gemeinsamen zentralen Längsachse (13) angeordnet sind, wobei die Einspritzeinrichtung (3) im Bereich der Längsachse (13) einen zentralen Durchgang (42) aufweist.

19. Vorrichtung nach Anspruch 18,
**dadurch gekennzeichnet,**
daß zumindest auf diese Erstreckungslänge der Spritzpreßvorrichtung im Bereich der Längsachse (13) der Förderkanal für die plastifizierte Masse frei von Hindernissen bildenden Einbauten ist.

20. Vorrichtung zum Spritzpressen von faserverstärkten Kunststoffen, insbesondere zum Durchführen eines Verfahrens nach einem oder mehreren der Ansprüche 1 bis 19, mit
a) einer ein Extrudergehäuse (8) und eine im Extrudergehäuse (8) um eine Längsachse (13) drehbar angeordneten Extruderschnecke (9) aufweisenden Plastifizierungseinrichtung (2),
b) einer Dosiereinrichtung (30) für Fasermaterial,
c) einer einen Einspritzzylinder (32), einen Einspritzkolben (38) und eine Einspritzdüse (50) aufweisenden Einspritzeinrichtung (3) und
d) einem Preßformwerkzeug mit aufeinander zu bewegbar angeordneten Formwerkzeughälften (68, 75),
insbesondere Vorrichtung nach Anspruch 18 und/oder 19,
**dadurch gekennzeichnet,**
daß die Einspritzeinrichtung (37) einen Einspritzkolben (38) und einen Einspritzzylinder (32) aufweist, wobei der Zylinder (32) fest an der Plastifizierungseinrichtung (2) z.B. am Extrudergehäuse (8), und der Kolben (38) fest am Formenrahmen (64) od.dgl., z.B. an einem zwischen der Einspritzdüse (50) und dem Kolben (38) angeordneten Einlaufstutzen (43) angeordnet ist, wobei die Plastifizierungseinrichtung (2) in Richtung der Längsachse (13) vor und zurück verschiebbar gelagert ist und Mittel (80) vorhanden sind, welche die Plastifizierungseinrichtung (2) mit Zylinder (32) relativ zum Einspritzkolben (38) verschieben, wobei der Kolben (38) im Bereich der Längsachse (13) einen zentralen Durchgang (42) aufweist.

21. Vorrichtung nach einem oder mehreren der Ansprüche 18 bis 20,
**dadurch gekennzeichnet,**
daß an einem Ende (10) des röhrenförmigen Extrudergehäuses (8) ein an sich bekannter Drehantrieb zum Drehen der Schnecke (9) im Gehäuse (8) angeordnet ist.

22. Vorrichtung nach einem oder mehreren der Ansprüche 18 bis 21,
**dadurch gekennzeichnet,**
daß die Schnecke (9) einen im wesentlichen langgestreckten zylindrischen Schneckenkern (11) und helixförmig darum angeordneten Schneckengänge (12) aufweist, wobei sich die Extruderschnecke (9) von dem antriebsseitigen Ende (10) durch das Extrudergehäuse (8) bis zum einem Schneckenkopf (9a) erstreckt.

23. Vorrichtung nach einem oder mehreren der Ansprüche 18 bis 22,
**dadurch gekennzeichnet,**
daß das Extrudergehäuseende (10), an dem der Drehantrieb angeordnet ist, in Förderrichtung der Schnecke (9) ein hinteres Ende (10) darstellt, wobei der Drehsinn der Schnecke (9) so gewählt ist, daß die Schnecke (9) zu förderndes Gut von diesem Ende (10) nach vorne fördert.

24. Vorrichtung nach einem oder mehreren der Ansprüche 18 bis 23,
**dadurch gekennzeichnet,**
daß das Extrudergehäuse (8) sowie die Schnecke (9) liegend angeordnet sind, d.h., daß die gemeinsame Längsachse (13) im wesentlichen horizontal orientiert angeordnet ist.

25. Vorrichtung nach einem oder mehreren der Ansprüche 18 bis 24,
**dadurch gekennzeichnet,**
daß im Bereich des Endes (10) des Extrudergehäuses (8) ein Schredder (14) am Exrudergehäuse (8) angeordnet ist, wobei der Schredder (14) ein etwa hohlzylindrischer Körper ist, der mit seiner Längsachse (15) senkrecht zur Achse (13) des Extrudergehäuses (8) und der Schnecke (9) orientiert ist.

26. Vorrichtung nach einem oder mehreren der Ansprüche 18 bis 25,
**dadurch gekennzeichnet,**
daß der Schredder (14) eine Mantelwandung (16), eine Bodenwandung (17) und eine obere, der Bodenwandung (17) gegenüberliegende Öffnung (18) aufweist.

27. Vorrichtung nach Anspruch 26,
**dadurch gekennzeichnet,**
daß von der Bodenwandung (17) gering beabstandet im Schredderhohlraum (19) eine Kreisscheibe (20) axial zentral angeordnet ist, deren Durchmesser etwas geringer ist als der Innendurchmesser des Schredders (14), wobei die Kreisscheibe (20) um die Längsachse (15) drehbar angeordnet ist.

28. Vorrichtung nach Anspruch 26 und/oder 27,
**dadurch gekennzeichnet,**
daß Schreddermesser an der Scheibe (20) angeordnet sind.

29. Vorrichtung nach einem oder mehreren der Ansprüche 26 bis 28,
**dadurch gekennzeichnet,**
daß zur Öffnung (18) hin, ein Stück von der Scheibe (20) nach oben beabstandet, in der Mantelwandung (16) eine senkrecht zur Längsachse (15) orientierte, tangentiale zylinderabschnittsförmige Öffnung (23) angeordnet ist, deren Zylinderradius dem Zylinderradius des Extrudergehäuses (8) entspricht.

30. Vorrichtung nach einem oder mehreren der Ansprüche 18 bis 29,
**dadurch gekennzeichnet,**
daß in dem Extrudergehäuse (8) im Bereich der Öffnung (23) des Schredders (14) eine zu dieser Öffnung korrespondierende, senkrecht zur Längsachse (13) orientierte zylinderabschnittsförmige Öffnung (24) angeordnet ist, deren Zylinderradius zum Zylinderradius der Mantelwandung (16) des Schredders (14) entspricht.

31. Vorrichtung nach einem oder mehreren der Ansprüche 18 bis 30,
**dadurch gekennzeichnet,**
daß der Schredder (14) mit der Öffnung (23) an der Öffnung (24) des Extrudergehäuses (8) angesetzt angeordnet ist, wobei die die Öffnungen (23, 24) begrenzenden Ränder aufeinander liegen.

32. Vorrichtung nach einem oder mehreren der Ansprüche 18 bis 31,
**dadurch gekennzeichnet,**
daß die Extruderschnecke (9) im Bereich der Öffnungen (23, 24) tangential und mit einer Teilbreite in den Hohlraum (19) des Schredders (14) hineinragend angeordnet ist.

33. Vorrichtung nach einem oder mehreren der Ansprüche 18 bis 32,
**dadurch gekennzeichnet,**
daß an dem Schredder (14) bzw. seinem Mantel (16) eine Dosiereinheit (26) für Additive, insbesondere mineralische Additive, über einen Zuführungsstutzen (17) angeordnet ist, wobei der Zuführungsstutzen (17) oberhalb der Scheibe (20) und auf einem höheren Niveau als dem der Öffnungen (23, 24) in den Schredder (14) mündet.

34. Vorrichtung nach einem oder mehreren der Ansprüche 18 bis 33,
**dadurch gekennzeichnet,**
daß in Förderrichtung der Schnecke (9) vom Schredder (14) und dem Schneckenkopf (9a) beabstandet die Zudosiereinheit (30) für Fasern am Extrudergehäuse (8) angeordnet ist, wobei die Zudosiereinheit (30) derart angeordnet ist, daß zu dosierende Fasern von der Schnecke (9) eingezogen bzw. in den Bereich der Schnecke (9) gegeben werden können.

35. Vorrichtung nach Anspruch 34,
**dadurch gekennzeichnet,**
daß die Zudosiereinheit (30) in einem Dekompressionsbereich der Schnecke (9) angeordnet ist.

36. Vorrichtung nach einem oder mehreren der Ansprüche 18 bis 35,
**dadurch gekennzeichnet,**
daß der Abstand der Zudosiereinheit (30) zum Schneckenkopf (9a) so gewählt ist, daß eine ausreichende Homogenisierung der Fasern auf dem Weg von der Zudosiereinheit (30) bis zum Schneckenkopf (9a) gewährleistet ist.

37. Vorrichtung nach einem oder mehreren der Ansprüche 18 bis 36,
**dadurch gekennzeichnet,**
daß das Extrudergehäuse (8) über den Kopf (9a) der Schnecke (9) ein Stück vorsteht, so daß der vorstehende Teil einen Hohlzylinders (32) ausbildet.

38. Vorrichtung nach Anspruch 37,
**dadurch gekennzeichnet,**
daß sich der über den Schneckenkopf (9a) nach vorne hinausstehende Teil (32) des Gehäuses (8) auf Höhe des Schneckenkopfes (9a) mit einer Stufe (33) erweitert, so daß der erweiterte Teil einen Hohlzylinder (32) ausbildet, der einen größeren Durchmesser aufweist als das um die Schnecke (9) angeordnete Extrudergehäuse (8).

39. Vorrichtung nach einem oder mehreren der Ansprüche 18 bis 38,
**dadurch gekennzeichnet,**
daß die Plastifizierungseinheit (2), bestehend aus dem Extrudergehäuse (8) der Extruderschnecke (9), dem Schredder (14) mit Additiv-Zudosiereinheit (26) sowie dem hohlzylindrischen Teil (32) und der Faserzudosiereinheit (30) auf einem gemeinsamen Maschinenträger bzw. Maschinenfundament (34) angeordnet ist.

40. Vorrichtung nach Anspruch 39,
**dadurch gekennzeichnet,**
daß das Maschinenfundament (34) zweiteilig mit einem hinteren Teil (34a), der im Bereich des Schredders (14) angeordnet ist, und einem vorderen Teil (34b), der im Bereich der Faserzudosiereinheit (30) angeordnet ist, ausgebildet ist.

41. Vorrichtung nach einem oder mehreren der Ansprüche 18 bis 40,
**dadurch gekennzeichnet,**
daß das Maschinenfundament (34) in Längsrichtung des Extrudergehäuses (8) bzw. der Schnecke (9) bzw. in Förderrichtung der Schnecke (9) verschieblich auf einer Bodenplatte (35) gelagert ist.

42. Vorrichtung nach einem oder mehreren der Ansprüche 18 bis 41,
**dadurch gekennzeichnet,**
daß der Hohlzylinders (32) einstückig am Extrudergehäuse (8) augebildet ist.

43. Vorrichtung nach einem oder mehreren der Ansprüche 18 bis 42,
**dadurch gekennzeichnet,**
daß der Hohlzylinder (32) als separates Bauteil ausgebildet ist, wobei der Hohlzylinders (32) an einem nach außen vorstehenden, ringstegförmigen Flansch (33) des Extrudergehäuses (8) auf Höhe des Schneckenkopfes (9a) angeordnet ist.

44. Vorrichtung nach einem oder mehreren der Ansprüche 18 bis 43,
**dadurch gekennzeichnet,**
daß in dem Hohlzylinder (32) der Kolben (38) formschlüssig und längsverschieblich angeordnet ist, wobei der Kolben (38) bezüglich der Längsachse (13) eine Länge aufweist, die der Länge des vom Extrudergehäuses (8) vorstehenden Hohlzylinders (32) entspricht und der Kolben (38) eine der Extruderschnecke (9) zugewandte Kolbenstirnfläche (39) einen von der Extruderschnecke (9) weg weisenden Kolbenboden (40) und eine Kolbenmantelwandung (41) aufweist, wobei in den Kolben (38) ein axial zentraler Durchlaß (42) eingebracht ist, der sich von der Kolbenstirnfläche durch den Kolben (38) zum Kolbenboden (40) erstreckt.

45. Vorrichtung nach einem oder mehreren der Ansprüche 18 bis 44,
**dadurch gekennzeichnet,**
daß der Durchlaß (42) eine Weite aufweist, die vorzugsweise geringer ist als die innere Weite des Extrudergehäuses (8) bzw. des Durchmessers der Extruderschnecke (9).

46. Vorrichtung nach einem oder mehreren der Ansprüche 18 bis 45,
**dadurch gekennzeichnet,**
daß am Kolbenboden (40) ein zylindrischer Einlaufstutzen (43) mit einem ringstegförmigen Flansch (44) axial fluchtend zum Kolben (38) angeordnet ist, wobei der Einlaufstutzen (43) einen Durchmesser aufweist, der geringer ist als der Durchmesser des Kolbens (38), wobei der Ringstegflansch (44) einen äußeren Durchmesser aufweisen kann, der dem des Kolbens (38) entspricht, wobei axial fluchtend zum Durchlaß (42) des Kolbens (38) in dem Einlaufstutzen (43) ein zentral axial fluchtender Durchlaß (45) eingebracht ist, so daß der Einlaufstutzen (43) als Hohlyzlinder ausgebildet ist.

47. Vorrichtung nach Anspruch 46,
**dadurch gekennzeichnet,**
daß der Durchlaß (45) eine Weite aufweist, die der des Durchlasses (42) enspricht.

48. Vorrichtung nach Anspruch 46,
**dadurch gekennzeichnet,**
daß der Durchlaß (45) sich im Bereich des Ringstegflansches (44) von einem Durchmesser bzw. von einer Weite, die der des Durchlasses (42) entspricht, auf ein etwas geringeres Maß verjüngt.

49. Vorrichtung nach einem oder mehreren der Ansprüche 18 bis 48,
**dadurch gekennzeichnet,**
daß an der, den Ringstegflansch (44) axial gegenüberliegenden Seite des Einlaufstutzens (43) der Einlaufstutzen (43) einen weiteren Ringstegflansch (46) aufweist, der nach außen vorsteht.

50. Vorrichtung nach einem oder mehreren der Ansprüche 18 bis 49,
**dadurch gekennzeichnet,**
daß an dem Ringstegflansch (46) anschließend die Einspritzdüse (50) mit einem an dem Ringstegflansch (46) axial anliegenden Ringstegflansch (51) angeordnet ist, wobei sich die Einspritzdüse (50) von dem Ringstegflansch (51) in axialer Richtung und in Förderrichtung nach vorne erstreckt.

51. Vorrichtung nach einem oder mehreren der vorhergehenden Ansprüche 18 bis 50,
**dadurch gekennzeichnet,**
daß sich die Einspritzdüse (50) an dem dem Einlaufstutzen (43) bzw. dem Ringstegflansch (51) gegenüberliegenden Ende (52) verjüngt, wobei die Einspritzdüse (50) einen axialen zentralen Durchlaß (53) aufweist, welcher im Bereich des Ringstegflansches (51) dem Durchmesser des Durchlasses (45) entspricht.

52. Vorrichtung nach Anspruch 51,
**dadurch gekennzeichnet,**
daß sich der Durchlaß (53) im Bereich des Endes (52) der Einspritzdüse (50) zu einer Einspritzdüsenmündung (54) verengt.

53. Vorrichtung nach Anspruch 52,
**dadurch gekennzeichnet,**
daß die Einspritzdüsenmündung (54) einen Durchmesser aufweist, der ein Drittel bis die Hälfte des Durchmessers bzw. der Weite des Durchlasses (53) entspricht.

54. Vorrichtung nach einem oder mehreren der Ansprüche 18 bis 53,
**dadurch gekennzeichnet,**
daß die Mündung (54) der Einspritzdüse (50) mit der Vorderkante (55) der Düse (50) bzw. der Mündung (54) abschließend mit einer länglich zylindrischen Nadel (56) verschließbar ist, wobei die Nadel (56) schräg zur Längsachse (13) und der Einspritzdüse (50) angeordnet ist, wobei ihre Längsachse (57) mit der Längsachse (13) einen gegen die Förderrichtung geöffneten spitzen Winkel (58) einschließt.

55. Vorrichtung nach Anspruch 54,
**dadurch gekennzeichnet,**
daß die Nadel (56) in einem Nadelkanal (59) in der Zylinderwandung (50a) der Düse (50) axial verschieblich geführt ist, wobei der Nadelkanal (59) eine sich von der Mündung (54) schräg zur Längsachse (13) entgegen der Förderrichtung nach außen erstreckende Bohrung (59) ist und der Nadelkanal (59) und die Mündung (54) einen identischen Innendurchmesser aufweisen.

56. Vorrichtung nach einem oder mehreren der Ansprüche 18 bis 55,
**dadurch gekennzeichnet,**
daß außerhalb der Zylinderwandung (50a) der Einspritzdüse (50) ein hydraulischer Nadelantrieb (60) an der Zylinderwandung (50a) angeordnet ist, welcher die Nadel (56) entlang ihrer Längsachse (57) verschieben kann.

57. Vorrichtung nach einem oder mehreren der Ansprüche 18 bis 56,
**dadurch gekennzeichnet,**
daß die Vorrichtung ganz oder teilweise beheizt ist.

58. Vorrichtung nach einem oder mehreren der Ansprüche 18 bis 57,
**dadurch gekennzeichnet,**
daß in Förderrichtung vor der Einspritzeinheit (2) der Formgebungsbereich (3) angeordnet ist.

59. Vorrichtung nach einem oder mehreren der Ansprüche 18 bis 58,
**dadurch gekennzeichnet,**
daß der Formgebungsbereich (3) einen Formenrahmen (64) mit zwei aufrecht stehenden quadratisch plattenförmigen Querhäuptern (65, 67) aufweist, die sich mit Flachseiten (63) gegenüberliegend mit vier je in den Eckbereichen angeordneten zylindrischen Holmen oder Säulen (66) verbunden sind, wobei die plattenförmigen Querhäupter (65, 67) mit ihren Plattenebenen senkrecht zu ihrer Längsachse (13) orientiert sind und die Säulen (66) parallel beabstandet zur Längsachse (13) angeordnet sind.

60. Vorrichtung nach einem oder mehreren der Ansprüche 18 bis 59,
**dadurch gekennzeichnet,**
daß das dem Einspritzbereich (2) zugewandte Querhaupt (65) eine feststehende Formtischplatte (65) ausbildet, an deren Flachseite (63) ein Formwerkzeug (68) angeordnet ist, wobei die Formtischplatte (65) und das Formwerkzeug (68) entlang der Längsachse (13) eine zentrale axiale Aussparung (27) aufweisen, die der äußeren Form der Mündung (54) und der Einspritzdüse (50) soweit angepaßt ist, daß die Einspritzdüse (50) senkrecht zur Plattenebene (65) und dem Formwerkzeug (68) eingesteckt angeordnet ist, wobei die Vorderkante (55) der Einspritzdüse (50) bzw. die Mündung (54) mit der zu einem Formteil weisenden Formwerkzeugplatteninnenfläche (73) vorzugsweise bündig abschließt.

61. Vorrichtung nach einem oder mehreren der vorhergehenden Ansprüche 18 bis 60,
**dadurch gekennzeichnet,**
daß zwischen den Querhäuptern (65, 67) ein beweglicher Formentisch (74) mit einem dem Formwerkzeug (68) zugewandten, zu diesem korrespondierenden Formwerkzeug (75) angeordnet ist, wobei auf seiner dem Formwerkeug (75) abgewandten Seite (76) der Formentisch (74) mit dem in Förderrichtung vorderen Querhaupt (67) über einen hydraulischen Antrieb verbunden ist.

62. Vorrichtung nach einem oder mehreren der vorhergehenden Ansprüche 18 bis 61,
**dadurch gekennzeichnet,**
daß das Formwerkzeug (75) mit dem beweglichen Formentisch (74) auf das gegenüberliegende, korrespondierende Formwerkzeug (68) zu und von ihm weg bewegbar angeordnet ist.

63. Vorrichtung nach einem oder mehreren der Ansprüche 18 bis 62,
**dadurch gekennzeichnet,**
daß der Formenbereich (4) bzw. Formenrahmen (64) fest mit der Bodenplatte (35) verbunden ist, so daß auch die Einspritzeinheit (3) mit Kolben (38), Einlaufstutzen (43) sowie Einspritzdüsen (50) mit dem Formenbereich ortsfest angeordnet ist.

64. Vorrichtung nach einem oder mehreren der Ansprüche 18 bis 63,
**dadurch gekennzeichnet,**
daß die Einspritzeinheit am Rahmen (64) der Formgebungseinheit (4) befestigt ist.

65. Vorrichtung nach einem oder mehreren der Ansprüche 18 bis 64,
**dadurch gekennzeichnet,**
daß zwischen dem die Einspritzeinheit (3) aufweisenden Querhaupt (65) bzw. Rahmen (64) und der beweglichen Plastifizierungseinheit (2) ein hydraulischer Antrieb (80) derart angeordnet ist, daß die bewegliche Plastifizierungseinheit (2) auf die Einspritzeinheit (3) bzw. das Querhaupt (65) bzw. den Rahmen (64) zu bewegbar ist.

66. Vorrichtung nach einem oder mehreren der Ansprüche 18 bis 65,
**dadurch gekennzeichnet,**
daß die hydraulische Bewegungseinrichtung (80) eine Kolben/Zylinderanordnung ist, wobei eine Kolbenstange (81) an dem Querhaupt (65) bzw. dem Rahmen (64) und der Zylinder (82) am Extrudergehäuse (8) angreift.

67. Vorrichtung nach einem oder mehreren der Ansprüche 18 bis 66,
**dadurch gekennzeichnet,**
daß zwei Plastifizierungseinheiten (2) mit Einspritzeinheit (3), bezogen auf eine Preßrichtung (85) des Formgebungsbereichs (4) senkrecht an dem starren Querhaupt (65) angeordnet sind.

68. Vorrichtung nach Anspruch 67,
**dadurch gekennzeichnet,**
daß die zwei Plastifizierungseinheiten (2) mit Einspritzeinheit (3) sich gegenüberliegend, axial fluchtend an dem starren Querhaupt (65) angeordnet sind.

69. Vorrichtung nach Anspruch 67 und/oder 68,
**dadurch gekennzeichnet,**
daß die Mündung (54) der Spritzdüse (50) eine Breitschlitzdüse ist.

70. Vorrichtung nach einem oder mehreren der Ansprüche 67 bis 69,
**dadurch gekennzeichnet,**
daß die Mündung (54) eine Breite hat, die in etwa ein Drittel der Formbreite beträgt.
